(19) Europäisches Patentamt
European Patent Office
Office européen des brevets

(11) **EP 3 356 806 B1**

(12) **EUROPÄISCHE PATENTSCHRIFT**

(45) Veröffentlichungstag und Bekanntmachung des Hinweises auf die Patenterteilung:
**17.04.2024 Patentblatt 2024/16**

(21) Anmeldenummer: **16777614.5**

(22) Anmeldetag: **26.09.2016**

(51) Internationale Patentklassifikation (IPC):
**G01N 27/00** *(2006.01)* **B01J 19/00** *(2006.01)*
**C02F 1/66** *(2023.01)* **G05D 21/00** *(2006.01)*

(52) Gemeinsame Patentklassifikation (CPC):
**B01J 19/0006; G05D 21/02;** B01J 2219/00177;
B01J 2219/002; B01J 2219/00209;
B01J 2219/00213; B01J 2219/00216;
B01J 2219/0022; B01J 2219/00231

(86) Internationale Anmeldenummer:
**PCT/EP2016/072797**

(87) Internationale Veröffentlichungsnummer:
**WO 2017/055197 (06.04.2017 Gazette 2017/14)**

(54) **NEUTRALISATIONSANLAGE**

NEUTRALISATION APPARATUS

INSTALLATION DE NEUTRALISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.09.2015 EP 15187610**

(43) Veröffentlichungstag der Anmeldung:
**08.08.2018 Patentblatt 2018/32**

(73) Patentinhaber: **Covestro Deutschland AG**
**51373 Leverkusen (DE)**

(72) Erfinder: **KÜPPER, Achim**
**51375 Leverkusen (DE)**

(74) Vertreter: **Levpat**
**c/o Covestro AG**
**Gebäude K12**
**51365 Leverkusen (DE)**

(56) Entgegenhaltungen:
**WO-A1-02/02465     DE-A1- 4 403 682**
**DE-U1- 20 306 503**

**Beschreibung**

Die Erfindung betrifft eine Neutralisationsanlage umfassend mindestens eine Reaktionskammer mit einer ersten Zuleitung für ein säurehaltiges Produkt und mindestens einer weiteren Zuleitung für ein basenhaltiges Produkt, wobei mindestens eine der Zuleitungen mindestens ein Ventilmittel zur Regelung der Einflussmenge in die Reaktionskammer aufweist und mindestens eine Ionenreglervorrichtung eingerichtet zum Regeln des Ventilmittels. Darüber hinaus betrifft die Erfindung ein Verfahren zur Neutralisation eines säurehaltigen oder basenhaltigen Produkts und eine Ionenreglervorrichtung.

In der Industrie finden sich chemische Anlagen, welche als Haupt- und/oder Nebenprodukte ein säurehaltiges Produkt oder ein basenhaltiges Produkt produzieren. Beispielsweise kann eine Anlage, die zum Herstellen von Toluol-2,4-diisocyanat (TDI) eingerichtet ist, als Nebenprodukt Salzsäure herstellen. Die Salzsäure kann in geeigneten Lagerbehältern zunächst zwischengelagert werden, um sie anschließend weiter zu transportieren und/oder anderen chemischen Anlagen zur Verfügung zu stellen.

Aufgrund von Störungen kann es dazu kommen, dass die Lagerkapazitätsgrenzen für die Salzsäure erreicht werden und keine weitere Salzsäure gelagert werden kann. Aus dem Stand der Technik ist es für diesen Fall üblich, die chemische Anlage abzuschalten. Insbesondere für den Fall, dass die hergestellte Säure oder Base lediglich ein Nebenprodukt ist, gehen mit der Abschaltung der chemischen Anlage für den Betreiber erhebliche wirtschaftliche Nachteile einher, da das Hauptprodukt nicht weiter hergestellt werden kann.

Grundsätzlich ist es aus dem Stand der Technik zudem bekannt, ein säurehaltiges Produkt in einer Neutralisationsanlage mit einem basenhaltigen Produkt zu neutralisieren (oder umgekehrt). Eine Neutralisationsanlage aus dem Stand der Technik kann eine Reaktionskammer umfassen. Die Reaktionskammer kann über eine erste Zuleitung, beispielsweise für ein säurehaltiges Produkt, und eine weitere Zuleitung, beispielsweise für ein basenhaltiges Produkt, verfügen. Mindestens eine der Zuleitungen kann ein Ventilmittel aufweisen, um den Zufluss von dem entsprechenden Produkt in die Reaktorkammer zu regeln.

Beispielsweise kann bei der oben beschriebenen TDI-Anlage die Neutralisationsanlage eine erste Zuleitung für das Nebenprodukt der TDI Anlage, vorliegend Salzsäure, und eine weitere Zuleitung das basenhaltige Produkt, beispielsweise Natronlauge, umfassen. Bei diesem Beispiel weist insbesondere die weitere Zuleitung ein Ventilmittel auf, um den Zufluss der Natronlauge, also die Stellgröße, zu regeln, beispielsweise zu erhöhen oder zu reduzieren. Dies erfolgt typischerweise abhängig von dem gemessenen pH-Istwert des Gemisches in der Reaktionskammer.

Problematisch hieran ist jedoch, dass eine Reglervorrichtung mit einem pH-Wertregler eingerichtet zum Regeln des Ventilmittels nichtlinear betrieben werden muss. Grund hierfür ist, dass die Stellgröße, wie der Zufluss von Natronlauge, die Regelgröße, also der zu regelnde pH-Wert, nichtlinear beeinflusst aufgrund von Wasserdissoziation, des Gleichgewichts von Säure und konjugierter Base bzw. von Base und konjugierter Säure und einer logarithmischen Erfassung der $H_3O^+$ Konzentration. In dem relevanten pH-Bereich findet eine Änderung des Einflusses der Stellgröße auf den pH-Wert über Größenordnungen statt. Der Regelungsprozess erfordert daher ein aufwändiges Einstellen der Reglerparameter über den Gain-Scheduling (Variation der Reglerverstärkung abhängig vom pH-Messwert).

Insbesondere bei großen Abweichungen vom pH-Sollwert (z.B. >2 pH-Werte) ist es zudem notwendig, dass eine aggressive Änderung der Stellgröße durch den Regler vorgenommen wird. Dies ist gerade bei einem pH-Wertregler schwierig umzusetzen.

Daher liegt der vorliegenden Erfindung die Aufgabe zugrunde, eine Neutralisationsanlage bereitzustellen, welche in einfacher Weise eine verbesserte Regelung eines Neutralisationsprozesses ermöglicht.

Die zuvor hergeleitete und aufgezeigte Aufgabe wird gemäß einem ersten Aspekt der Erfindung bei einer Neutralisationsanlage nach Patentanspruch 1 gelöst. Die Neutralisationsanlage umfasst mindestens eine Reaktionskammer mit einer ersten Zuleitung für ein säurehaltiges Produkt und mindestens einer weiteren Zuleitung für ein basenhaltiges Produkt. Mindestens eine der Zuleitungen weist mindestens ein Ventilmittel zur Regelung der Einflussmenge in die Reaktionskammer auf. Die Ionenreglervorrichtung umfasst mindestens eine Auswerteeinrichtung eingerichtet zum Bestimmen von mindestens einem Ionenkonzentrations-Istwert basierend auf einem pH-Istwert des in der Reaktionskammer befindlichen Gemisches. Die Ionenreglervorrichtung umfasst mindestens eine Ionenreglereinrichtung umfassend mindestens einen Ionenregler eingerichtet zum Regeln des Ventilmittels abhängig von dem Ionenkonzentrations-Istwert und einem Ionenkonzentrations-Sollwert.

Indem im Gegensatz zum Stand der Technik ein Ionenkonzentrations-Istwert aus dem insbesondere gemessenen pH-Istwert bestimmt und dieser als (Hilfs-)Regelgröße von einem Ionenregler verwendet wird, wird in einfacher Weise eine verbesserte Regelung eines Neutralisationsprozesses erreicht. Insbesondere kann hierdurch eine Linearisierung des Regelungsproblems vorgenommen, also ein nahezu lineares Verhalten des mindestens einen Reglers auf das System über zumindest einem wesentlichen Teil des relevanten pH-Bereichs erreicht werden. In diesem pH-Bereich findet eine Änderung des Einflusses der Stellgröße auf den pH-Wert über Größenordnungen statt. Durch die erfindungsgemäße Lösung kann auf ein aufwändiges Einstellen der Reglerparameter über den Gain-Scheduling (Variation der Reglerverstärkung abhängig vom pH-Messwert) verzichtet werden. Es kann erreicht werden, dass bei großen Abweichungen von einem pH-Sollwert (z.B. >2 pH-Werte) eine aggressive Änderung der Stellgröße durch den Ionenregler vorgenommen wird, während bei kleineren Abweichungen vom pH-Sollwert (z.B. ≤2 pH-Werte) die Änderung der Stellgröße durch den Ionenregler um Größenordnungen kleiner ist und somit der PH-Wert des Prozesses insgesamt rasch auf den gewünschten pH-Sollwert konvergiert.

Die Neutralisationsanlage umfasst mindestens eine Reaktorkammer. Eine Reaktorkammer zeichnet sich dadurch aus, dass in der Reaktorkammer der chemische Neutralisationsprozess abläuft. In der Reaktorkammer kann sich das flüssige Gemisch aus mindestens zwei flüssigen Produkten, wie einem säurehaltigen und ein basenhaltigen Produkt, befinden. Ein erstes Produkt kann über einen erste Zuleitung, beispielsweise eine Rohrverbindung, und ein weiteres Produkt über eine weitere Zuleitung, beispielsweise auch eine Rohrverbindung, in die Reaktorkammer geleitet werden. Es versteht sich, dass die mindestens zwei Zuleitungen durch eine gemeinsame Zuleitung realisiert sein können. Es versteht sich ferner, dass der Neutralisationsprozess ein mehrstufiger Prozess mit einer Mehrzahl von Reaktorkammern sein kann. Die Neutralisations-Funktion einer Reaktorkammer kann auch durch einen Rohrreaktor oder Mischer erreicht werden.

Mindestens eine der Zuleitungen weist ein Ventilmittel auf, um die Einflussmenge in die Reaktorkammer zu regeln, also beispielsweise zu erhöhen oder zu reduzieren. Insbesondere weist zumindest die Zuleitung mindestens ein Ventilmittel auf, durch die ein Produkt bzw. Produktstrom gefördert wird, der als Stellgröße der Regelung dient. Soll beispielsweise ein säurehaltiges Produkt neutralisiert werden, so weist zumindest die Zuleitung des Produkts, welches als Stellgröße dient, wie das basenhaltige Produkt, ein Ventilmittel auf. Das Ventilmittel kann in einer untergelagerten Massenstromregelung oder einer Volumenstromregelung eingebunden sein.

Das mindestens eine Ventilmittel weist eine Kommunikationsverbindung zu einer Ionenreglervorrichtung auf. Die Ionenreglervorrichtung ist dazu eingerichtet, das Ventilmittel zu regeln, also beispielsweise zu bewirken, dass der Stellantrieb eines Ventils entsprechend der durch die Ionenreglervorrichtung ermittelten Stellgröße, eingestellt wird. Die Flussmenge durch die Zuleitung kann also (bis einen maximalen Wert) erhöht oder (bis einen minimalen Wert, z.B. 0) reduziert werden.

Die Ionenreglervorrichtung zeichnet sich dadurch aus, dass eine Auswerteeinrichtung vorgesehen ist, die eingerichtet ist, aus einem bereitgestellten pH-Istwert einen Ionenkonzentrationswert abzuleiten. Es ist erkannt worden, dass zwischen einem pH-Wert und einem Ionenkonzentrationswert eine feste Beziehung besteht. Indem aus einem bereitgestellten pH-Istwert des Gemisches in der Reaktorkammer ein Ionenkonzentrations-Istwert bestimmt, insbesondere berechnet wird, kann das Regelproblem linearisiert werden. Ein Ionenkonzentrations-Sollwert kann in entsprechender Weise bestimmt werden.

Die Ionenreglervorrichtung umfasst mindestens eine Ionenreglereinrichtung, die mindestens einen Ionenregler umfasst. Ein Ionenregler ist ein Regler, der als Eingangsgrößen Ionenkonzentrationswerte erhält und verarbeitet. Insbesondere regelt der Ionenregler abhängig von dem Ionenkonzentrations-Istwert des Gemisches in der Reaktorkammer und einem Ionenkonzentrations-Sollwert den Zufluss von mindestens einem Produkt bzw. Produktstrom. Aus der Regelabweichung von dem Ionenkonzentrations-Istwert zu dem Ionenkonzentrations-Sollwert kann die Stellgröße ermittelt werden. Wie bereits beschrieben wurde, kann die Stellgröße über eine Kommunikationsverbindung an das Ventilmittel übertragen werden. Entsprechend der Stellgröße wird dann das Stellmittel, wie ein Stellantrieb, des Ventilmittels eingestellt.

Der Ionenkonzentrations-Sollwert kann für den Neutralisationsprozess direkt vorgegeben werden. Alternativ kann ein pH-Sollwert vorgegeben werden, der z.B. von der Ionenreglervorrichtung in einen Ionenkonzentrations-Sollwert umgerechnet werden kann. Der Ionenkonzentrations-Sollwert entspricht einem gewünschten pH-Sollwert. Bei dem Ionenkonzentrations-Sollwert bzw. dem pH-Sollwert kann es sich beispielsweise um eine behördliche Vorgabe für ein Gemisch handeln, um dieses Gemisch in die Umwelt, wie einem Fluss, einleiten zu dürfen. Bei dem oben angegebenen Beispiel einer TDI-Anlage kann als pH-Sollwert beispielsweise ein pH-Sollwert von 7,8 $\pm$ 0,3 vorgegeben sein. Es versteht sich, dass ein pH-Sollwert andere Werte aufweisen kann.

Es versteht sich, dass die Ionenreglervorrichtung zumindest teilweise in einer Recheneinrichtung, wie einem Computer, etc., implementiert sein kann.

Gemäß einem ersten Ausführungsbeispiel der Neutralisationsanlage der vorliegenden Erfindung kann die Auswerteeinrichtung ein erstes Auswertemodul eingerichtet zum Bestimmen von einem ersten Ionenkonzentrations-Istwert basierend auf dem pH-Istwert umfassen. Die Auswerteeinrichtung kann mindestens ein weiteres Auswertemodul eingerichtet zum Bestimmen von mindestens einem weiteren Ionenkonzentrations-Istwert basierend auf dem pH-Istwert umfassen. Indem zwei unterschiedliche Ionenkonzentrations-Istwerte bestimmt werden, kann der breite pH-Istwertbereich (z.B. pH 0 bis pH 14) auf zwei Ionenkonzentrations-Istwertebereiche aufgeteilt werden. Es kann dann stets der für die augenblickliche Regelsituation beste Ionenkonzentrations-Istwert zur Regelung verwendet werden. Gemäß einem besonders bevorzugten Ausführungsbeispiel kann der erste Ionenkonzentrations-Istwert ein $OH^-$ (Hydroxidion) Ionenkonzentrations-Istwert und/oder der weitere Ionenkonzentrations-Istwert ein $H_3O^+$ (Oxonium) Ionenkonzentrations-Istwert sein. Oxonium ist die Bezeichnung für ein protoniertes Wassermolekül ($H_3O^+$). Hydroxidion ist ein negativ geladenes Ion, das entsteht, wenn Basen mit Wasser reagieren. Während sich durch Zugabe von Säuren die Gleichgewichtskonzentration durch Übergang der Protonen von der Säure auf Wassermoleküle der pH-Wert erniedrigt, wird in alkalischen Lösungen der pH-Wert erhöht, da die Konzentration von Oxoniumionen kleiner wird.

Grundsätzlich kann ein Neutralisationsprozess mit einem einzelnen Ionenregler geregelt werden. Um ein besonders exaktes und zeitnahes Konvergieren des pH-Istwerts auf einen pH-Sollwert zu erzielen, kann gemäß einer weiteren Ausführungsform die Ionenreglereinrichtung einen ersten Ionenregler und mindestens einen weiteren Ionenregler umfassen. Der erste Ionenregler kann eingerichtet sein, das Ventilmittel abhängig von dem ersten Ionenkonzentrations-Istwert und dem ersten Ionenkonzentrations-Sollwert zu regeln. Der weitere Ionenregler kann eingerichtet sein, das Ventilmittel abhängig von dem weiteren Ionenkonzentrations-Istwert und dem weiteren Ionenkonzentrations-Sollwert zu regeln.

In einer bevorzugten Ausführungsform kann der erste Ionenregler ein $OH^-$ Ionenregler sein. Als Eingangsparameter kann der $OH^-$ Ionenregler insbesondere einen $OH^-$ Ionenkonzentrations-Istwert erhalten. Ferner kann der $OH^-$ Ionenregler einen $OH^-$ Ionenkonzentrations-Sollwert erhalten und die Regelabweichung bestimmen. Zusätzlich oder alternativ kann der weitere Ionenregler ein $H3O^+$ Ionenregler sein. Der $H3O^+$ Ionenregler kann als Eingangsparameter insbesondere einen $H3O^+$ Ionenkonzentrations-Istwert erhalten. Ferner kann der $H3O^+$ Ionenregler einen $H3O^+$ Ionenkonzentrations-Sollwert erhalten und die Regelabweichung bestimmen. Die Wirkrichtung des $OH^-$ Ionenreglers ist insbesondere umgekehrt zur Wirkrichtung des $H3O^+$ Ionenreglers. Für den Fall, dass die Stellgröße ein Basestrom ist, ist die Wirkrichtung des $OH^-$ Ionenreglers invers und die Wirkrichtung des $H3O^+$ Ionenreglers direkt. Für den Fall, dass die Stellgröße ein Säurestrom ist, ist die Wirkrichtung des $OH^-$ Ionenreglers direkt und die Wirkrichtung des $H3O^+$ Ionenreglers invers.

Vorzugsweise sind bei einer Ionenreglereinrichtung mit zwei Ionenreglern die Ionenregler als konkurrierende Ionenregler ausgebildet. Mit anderen Worten ist bevorzugt einer der zwei Ionenregler aktiv während der andere Ionenregler inaktiv ist. Es ist also stets nur einer von beiden aktiv. Nur die Stellgröße des aktiven Ionenreglers wird an das Ventilmittel übertragen. Um einen geeigneten aktiven Ionenregler aus den mindestens zwei Ionenreglern auszuwählen, kann in einer erfindungsgemäßen Ausführungsform die Ionenreglervorrichtung mindestens eine Ionenreglerauswahleinrichtung eingerichtet zum Bestimmen von einem aktiven Ionenregler aus dem ersten Ionenregler und dem weiteren Ionenregler umfassen, wobei nur der aktive Ionenregler das Ventilmittel regelt.

Indem von zwei Ionenreglern stets nur einer aktiv ist, ist es möglich, den jeweils für die aktuellen Gegebenheiten bzw. den derzeit vorliegenden Voraussetzung des Regelprozesses besten Ionenregler auszuwählen. Hierdurch kann der Regelungsprozess noch weiter verbessert werden. Insbesondere kann die Ionenreglerauswahleinrichtung eingerichtet sein, den aktiven Ionenregler basierend auf der Regelabweichung zwischen dem ersten Ionenkonzentrations-Istwert und dem ersten Ionenkonzentrations-Sollwert und/oder der Regelabweichung zwischen dem weiteren Ionenkonzentrations-Istwert und dem weiteren Ionenkonzentrations-Sollwert zu bestimmen. Es ist erkannt worden, dass insbesondere die Regelabweichung(en) ein gutes Kriterium ist, den augenblicklich bevorzugten Ionenregler auszuwählen.

Gemäß einer besonders bevorzugten Ausführungsform kann die Ionenreglerauswahleinrichtung ein erstes Regelgrößenabweichungsmodul eingerichtet zum Bestimmen des Betrags der Regelabweichung zwischen dem ersten Ionenkonzentrations-Istwert und dem ersten Ionenkonzentrations-Sollwert umfassen. Die Ionenreglerauswahleinrichtung kann mindestens ein weiteres Regelgrößenabweichungsmodul eingerichtet zum Bestimmen des Betrags der Regelabweichung zwischen dem weiteren Ionenkonzentrations-Istwert und dem weiteren Ionenkonzentrations-Sollwert umfassen. Die Ionenreglerauswahleinrichtung kann mindestens ein Vergleichsmodul eingerichtet zum Vergleichen der bestimmten Beträge, also des Betrags der Regelabweichung zwischen dem ersten Ionenkonzentrations-Istwert und dem ersten Ionenkonzentrations-Sollwert und dem Betrag der Regelabweichung zwischen dem weiteren Ionenkonzentrations-Istwert und dem weiteren Ionenkonzentrations-Sollwert, umfassen. Die Ionenreglerauswahleinrichtung kann eingerichtet sein, den aktiven Ionenregler basierend auf dem Vergleichsergebnis zu bestimmen. Insbesondere ist erkannt worden, dass vorteilhafterweise der Ionenregler als aktiver Ionenregler bestimmt wird, dessen Regelabweichung vom Betrag her größer ist.

Vorzugweise überprüft die Ionenreglerauswahleinrichtung beispielsweise in bestimmten Zeitabständen oder nahezu kontinuierlich, welcher Ionenregler von den mindestens zwei Ionenreglern aktiv geschaltet sein sollte und welcher inaktiv geschaltet sein sollte. Um stets den bevorzugten Ionenregler aktiv und den anderen inaktiv zu schalten, ohne dass ein Sprung in der Regelgröße auftritt, ist es bevorzugt, dass der inaktive Ionenregler nachgeführt wird. In einer Ausführungsform der Neutralisationsanlage kann die Ionenreglerauswahleinrichtung eingerichtet sein, den inaktiven Ionenregler auf Nachführen zu schalten, derart, dass ein im Wesentlichen stoßfreies Umschalten zwischen dem ersten Ionenregler und dem weiteren Ionenregler erreicht wird. Unter einem stoßfreien Umschalten ist insbesondere zu verstehen, dass die Stellgröße im Moment des Umschaltens konstant ist.

In einer alternativen Ausführungsform können die zumindest zwei Ionenregler in einem einzelnen Ionenregler kombiniert sein. Vorzugsweise kann ein kombinierter Ionenregler vorgesehen sein. Der kombinierte Ionenregler kann eingerichtet sein, das Ventilmittel abhängig von einem kombinierten Ionenkonzentrations-Istwert und einem kombinierten Ionenkonzentrations-Sollwert zu regeln. Ein erstes Bestimmungsmodul eingerichtet zum Bestimmen des kombinierten Ionenkonzentrations-Istwert abhängig von dem OH⁻Ionenkonzentrations-Istwert und dem $H_3O^+$ Ionenkonzentrations-Istwert kann vorgesehen sein. Ein weiteres Bestimmungsmodul eingerichtet zum Bestimmen des kombinierten Ionenkonzentrations-Sollwert abhängig von dem OH⁻Ionenkonzentrations-Sollwert und dem $H_3O^+$ Ionenkonzentrations-Sollwert kann vorgesehen sein. Insbesondere können ein OH⁻Ionenregler und ein $H_3O^+$ Ionenregler zu einem Regler kombiniert sein. Beispielsweise kann die OH⁻ Ionenkonzentration und die $H_3O^+$ Ionenkonzentration zu einer kombinierten Ionenkonzentration zusammengefügt werden. Da der OH⁻ Ionenkonzentrationsbereich eine umgekehrte Regler-Wirkrichtung benötigt wie der $H_3O^+$ Ionenkonzentrationsbereich, kann die Wirkrichtung des kombinierten Reglers (indirekt) über ein negatives Vorzeichen für den OH⁻Ionenkonzentrationsbereich umgekehrt werden. Die kombinierte Ionenkonzentration kann die $H_3O^+$ Ionenkonzentration sein, wenn die $H_3O^+$ Ionenkonzentration größer als die OH⁻ Ionenkonzentration ist. Der kombinierte Regler kann beispielsweise im Falle eines Basestroms als Stellgröße direkt, bzw. mit einem Säurestrom als Stellgröße invers arbeiten. Wenn die $H_3O^+$ Ionenkonzentration kleiner als die OH⁻ Ionenkonzentration ist, kann die kombinierte Ionenkonzentration die OH⁻Ionenkonzentration sein. Wie bereits beschrieben wurde, kann dies mit einem negativen Vorzeichen erfolgen. Über das negative Vorzeichen kann die Wirkrichtung des Reglers für den OH⁻Ionenkonzentrationsbereich indirekt von direkt auf invers umgestellt (bzw. von invers auf direkt) werden. Die kombinierte Ionenkonzentration wird sowohl für den pH-Sollwert als auch den pH-Istwert berechnet und dem verbleibenden Regler als kombinierte Ionenkonzentrations-Sollwert bzw. Ionenkonzentrations-Istwert zugeführt.

Für die Ausführungsform mit einem Regler ist zu beachten, so dass vorzugsweise eine Korrektur des pH Werts derart eingestellt wird, dass der Übergang zwischen der OH⁻ Ionenkonzentration und der $H_3O^+$ Ionenkonzentration (die eine Ionenkonzentration wird größer als die andere) am Durchbruch der Titrationskurve erfolgt. Dies ist erforderlich, um insbesondere auf beiden Ionenkonzentrationsbereichen das gleiche Streckenverhalten (Verhalten der Ionenkonzentration bei Änderung der Stellgröße) zu erreichen. Somit kann mit dem einem Regler für beide Ionenkonzentrationsbereiche ein zufriedenstellendes Verhalten des geschlossenen Regelkreises eingestellt werden (also ein gutes Führungsverhalten (Istwert folgt Sollwert) und Störgrößenunterdrückung).

Grundsätzlich können als Ionenregler verschiedene Regler eingesetzt werden. In einer bevorzugten Ausführungsform kann der Ionenregler ein PID-Regler (proportional-integral-derivative controller) sein. Insbesondere können sämtliche Ionenregler PID-Regler sein.

Ferner ist erkannt worden, dass ein bereitgestellter, z.B. zuvor gemessener, pH-Istwert aufgrund von Temperatureinflüssen, Salzbildungsprozessen und ähnlichen Einflüssen fehlerhaft sein kann. In einer erfindungsgemäßen Ausführungsform wird daher vorgeschlagen, dass die Ionenreglervorrichtung mindestens eine Korrektureinrichtung eingerichtet zum Korrigieren des pH-Istwerts des in der Reaktionskammer befindlichen Gemisches umfasst. Insbesondere kann der pH-Istwert durch die bekannten Einflüsse (Säure und Base Kombination, Temperatur, Salzbildung) auf die Wasserdissoziation korrigiert werden. Der korrigierte pH-Istwert kann dann der Auswerteeinrichtung zum Bestimmen, insbesondere Berechnen, des mindestens einen Ionenkonzentrations-Istwerts basierend auf diesem korrigierten pH-Istwert bereitgestellt bzw. weitergeleitet werden. Insbesondere kann die Korrektur des Temperatureinflusses und des Salzeinflusses derart erfolgen, dass die Umschaltung der Ionenregler (in etwa) am Durchbruchspunkt der Titrationskurve stattfinden kann. Der pH-Sollwert kann in entsprechender Weise korrigiert werden. Erfolgt die Umschaltung am Durchbruchspunkt der Titrationskurve, so kann das (lineare) Strecken-Verhalten der Hilfsregelgrößen OH⁻ Ionenkonzentrations-Istwert und $H_3O^+$ Ionenkonzentrations-Istwert auf Änderungen der Stellgröße bis auf das Vorzeichen gleich sein. Beide Ionenregler können daher bis auf die Wirkrichtung (invers, direkt) auf gleiche Weise parametriert werden.

In der Variante mit einem Regler ist, wie bereits erwähnt, eine pH-Regelung erforderlich, so dass der Übergang von $H_3O+$ nach OH- am Durchbruchspunkt der Titrationskurve erfolgt. Dies ist notwendig, um mit einem Parametersatz des PID-Reglers ein zufriedenstellendes Verhalten des geschlossenen Regelkreises über den gesamten pH-Bereich zu erzielen.

Darüber hinaus kann mindestens eine Messeinrichtung eingerichtet zum Messen des pH-Istwerts des in der Reaktionskammer befindlichen Gemisches vorgesehen sein. Beispielsweise kann die Messeinrichtung einen pH-Meter umfassen. Die Messeinrichtung kann ferner eine Kommunikationsverbindung mit der Ionenreglervorrichtung haben. Die Messung des pH-Istwerts kann bevorzugt (nahezu) kontinuierlich durchgeführt werden.

Ein weiterer Aspekt der Erfindung ist ein Verfahren zur Neutralisation eines säurehaltigen Produkts oder basenhaltigen Produkts. Das Verfahren umfasst:

- Bereitstellen eines pH-Istwerts eines in einer Reaktionskammer befindlichen Gemisches,
- Bestimmen von mindestens einem Ionenkonzentrations-Istwert aus dem pH-Istwert, und
- Regeln des Zuflusses in die Reaktionskammer von mindestens einem Produkt in Abhängigkeit des bestimmten Ionenkonzentrations-Istwerts und einem Ionenkonzentrations-Sollwert.

Das Verfahren kann in einer Neutralisationsanlage, insbesondere die zuvor beschriebene Neutralisationsanlage, durchgeführt werden. Das Verfahren kann insbesondere ein computerimplementiertes Verfahren sein.

In eine Reaktorkammer können ein säurehaltiger Produktstrom und ein basenhaltiger Produktstrom zufließen und ein Gemisch bilden. Der pH-Wert des Gemisches kann gemessen und insbesondere bereitgestellt werden. Eine Auswerteeinrichtung kann mindestens einen Ionenkonzentrations-Istwert aus dem bereitgestellten, insbesondere gemessenen, pH-Istwert bestimmen. Vorzugsweise kann der mindestens eine Ionenkonzentrations-Istwert berechnet werden. Die Regelung des Zuflusses in die Reaktionskammer kann insbesondere automatisch erfolgen.

Ein noch weiterer Aspekt der Erfindung ist eine Ionenreglervorrichtung für eine Neutralisationsanlage. Die Ionenreglervorrichtung umfasst mindestens eine Auswerteeinrichtung eingerichtet zum Bestimmen von mindestens einem Ionenkonzentrations-Istwerts aus einem pH-Istwert eines in einer Reaktionskammer der Neutralisationsanlage befindlichen Gemisches. Die Ionenreglervorrichtung umfasst mindestens eine Ionenreglereinrichtung mit mindestens einem Ionenregler eingerichtet zum Regeln von mindestens einem Ventilmittel einer Zuleitung in die Reaktionskammer der Neutralisationsanlage abhängig von dem Ionenkonzentrations-Istwert und einem Ionenkonzentrations-Sollwert.

Die Merkmale der Verfahren, Vorrichtungen und Anlagen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, die erfindungsgemäße Neutralisationsanlage, das erfindungsgemäße Verfahren und die erfindungsgemäßen Ionenreglervorrichtung auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:

Fig. 1     ein Ausführungsbeispiel einer Neutralisationsanlage gemäß der vorliegenden Erfindung,

Fig. 2a    ein Ausführungsbeispiel einer Ionenreglervorrichtung gemäß der vorliegenden Erfindung,

Fig. 2b    ein weiteres Ausführungsbeispiel einer Ionenreglervorrichtung gemäß der vorliegenden Erfindung,

Fig. 3a    ein Ausführungsbeispiel eines Verfahrens gemäß der vorliegenden Erfindung,

Fig. 3b    ein weiteres Ausführungsbeispiel eines Verfahrens gemäß der vorliegenden Erfindung, und

Fig. 4     ein Simulationsbeispiel zur Neutralisation eines Salzsäurestroms HCl von 550 kg/h mit einem Natronlaugestrom NaOH als Stellgröße.

Nachfolgend werden gleiche Bezugzeichen für gleiche Elemente verwendet.

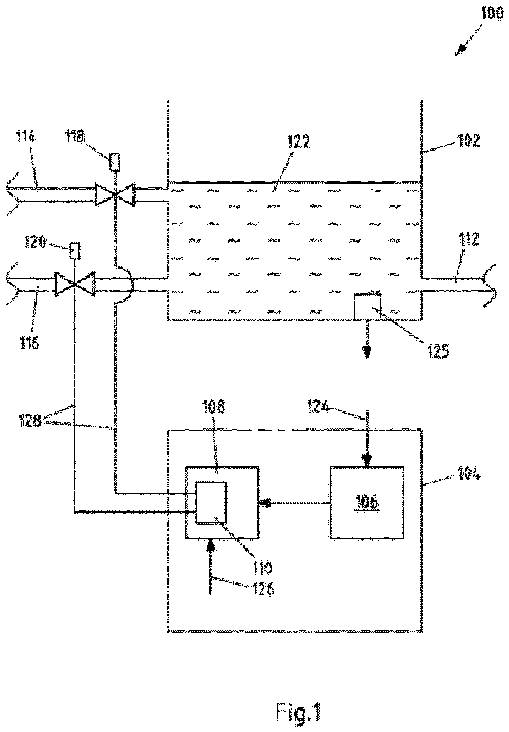

Die Figur 1 zeigt ein erstes Ausführungsbeispiel einer Neutralisationsanlage 100 gemäß der vorliegenden Erfindung. Die Neutralisationsanlage 100 umfasst vorliegend eine Reaktorkammer 102 und ein erstes Ausführungsbeispiel einer Ionenreglervorrichtung 104 gemäß der vorliegenden Erfindung.

Die Reaktionskammer 102 ist derart eingerichtet, dass in ihr ein Neutralisationsprozess durchgeführt werden kann. Über eine erste Zuleitung 114 kann beispielsweise ein säurehaltiges Produkt in die Reaktionskammer 102 eingebracht werden. Über eine zweite Zuleitung 116 kann ein basenhaltiges Produkt in die Reaktionskammer 102 eingebracht werden. Der Zufluss der beiden Produkte kann - wie nachfolgend ausgeführt werden wird - derart geregelt werden, dass sich die Produkte neutralisieren, also das Gemisch 122 einen gewünschten (neutralen) pH-Wert aufweist. Dann kann das Gemisch 122 über einen Auslass 112 in die Umgebung geleitet werden. Beispielsweise kann das Gemisch 122 in einen Fluss, See, oder dergleichen eingeleitet werden, ohne dass hierdurch die Umwelt Schaden nimmt.

Beispielhaft wird der Neutralisationsprozess nachfolgend für Salzsäure beschrieben, die durch Hinzufügen von Natronlauge neutralisiert werden soll. Insbesondere wird das Gemisch 122 in der Reaktorkammer umfassend Salzsäure und Natronlauge neutralisiert, derart, dass das Gemisch einen vorgebbaren und gewünschten pH-Wert, also einen pH-Sollwert, aufweist. Bei einer beispielhaften Anlage kann das Ziel sein, das resultierende Gemisch in die Umwelt, beispielsweise einen Fluss, einzuspeisen. Hier kann der pH-Sollwert beispielsweise zwischen 7 und 8,5, beispielsweise 7,8 $\pm$ 0,3 sein.

Folgende Beispielreaktion kann in der Reaktorkammer 102 auftreten:

$$H_3O^+_{(aq)} + Cl^-_{(aq)} + Na^+_{(aq)} + OH^-_{(aq)} \rightarrow NaCl_{(aq)} + 2H_2O \qquad (a)$$

Mit anderen Worten können Salzsäure und Natronlauge zu in Wasser gelöstem Natriumchlorid und Wasser reagieren.

Ferner kann die Reaktorkammer 102 mindestens eine Messeinrichtung 125 umfassen. Die Messeinrichtung 125 ist insbesondere zur Erfassung des pH-Istwerts des Gemisches 122 eingerichtet. Beispielweise kann die Messeinrichtung 125 ein pH-Meter umfassen.

Jeder der mindestens zwei Zuleitungen 114, 116 des vorliegenden Ausführungsbeispiels kann mindestens ein Ventilmittel 118, 120 aufweisen. Ein Ventilmittel 118, 120 ist dazu eingerichtet, die Durchflussmenge durch eine Zuleitung 114, 116 zu regeln. Mit anderen Worten kann durch die Ventilmittel 118, 120 die (jeweilige) Einflussmenge in die Reaktorkammer 102 geregelt werden. Es versteht sich, dass lediglich der Zufluss von einem der zumindest zwei Produkte geregelt werden kann. Wenn beispielsweise die Aufgabe der Neutralisationsanlage darin besteht, ein Nebenprodukt eines anderen Prozesses zu neutralisieren, um diesen Prozess nicht unterbrechen zu müssen, wird in der Regel nur der Zufluss der Stellgröße, beispielsweise der Natronlauge, von der Ionenreglervorrichtung 104 geregelt. In diesem Fall reicht es aus, wenn lediglich die Zuleitung der Natronlauge ein Ventilmittel aufweist, das von der Ionenreglervorrichtung 104 ansteuerbar ist.

Es versteht sich, dass die Reaktionskammer nur schematisch dargestellt ist. Beispielsweise kann die Reaktionskammer mehrere Kammern aufweisen und/oder mindestens ein Rührwerk, um eine gleichmäßige Durchmischung der eingebrachten Substanzen/Produkte zu erreichen.

Die beispielhafte Ionenreglervorrichtung 104 gemäß der vorliegenden Erfindung umfasst eine Auswerteeinrichtung 106 und eine Ionenreglereinrichtung 108. Die Auswerteeinrichtung 106 kann insbesondere eine geeignete Recheneinrichtung mit Prozessor- und Speichermitteln sein oder umfassen. Insbesondere ist die Auswerteeinrichtung 106 dazu konfiguriert, aus dem über einen Signaleingang 124 zur Verfügung gestellten und gemessen pH-Istwert mindestens einen Ionenkonzentrations-Istwert zu bestimmen.

Die Ionenreglereinrichtung 108 weist mindestens einen Ionenregler 110 auf, wie einen PID-Regler 110. Basierend auf dem mindestens einen bestimmten Ionenkonzentrations-Istwert und einem zur über einen Signaleingang 126 zur Verfügung gestellten Ionenkonzentrations-Sollwert kann der mindestens eine Ionenregler 110 mindestens ein Ventilmittel 118, 120 über eine Kommunikationsverbindung 128 regeln. Der Ionenkonzentrations-Sollwert korrespondiert insbesondere zu dem vorgebbaren pH-Sollwert.

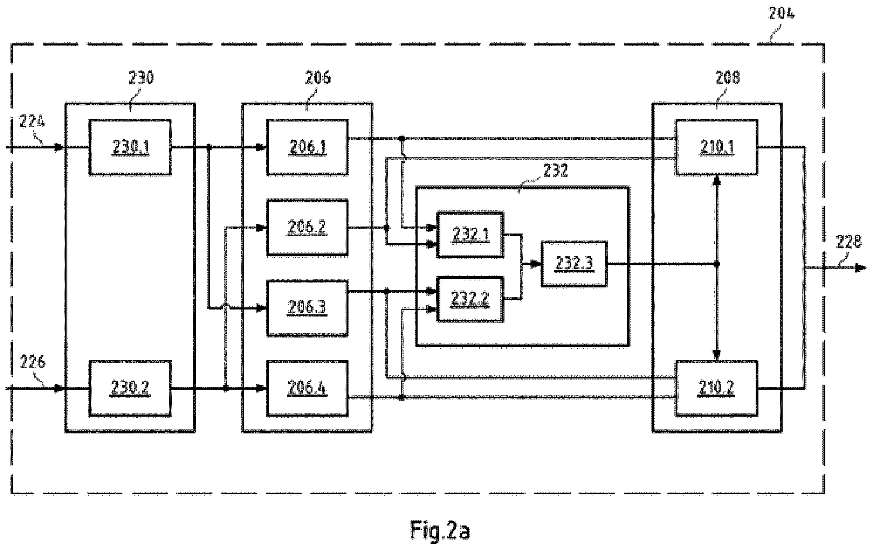

Figur 2a zeigt ein Ausführungsbeispiel einer Ionenreglervorrichtung 204 gemäß der vorliegenden Erfindung. Die Ionenreglervorrichtung 204 umfasst eine Korrektureinrichtung 230, eine Auswerteieinrichtung 206, eine Ionenreglerauswahleinrichtung 232 und eine Ionenreglereinrichtung 208. Über einen ersten Signaleingang 224 kann der (optionalen) Korrektureinrichtung 230 der (aktuelle) pH-Istwert des in einer Reaktionskammer befindlichen Gemisches zur Verfügung gestellt werden. Über einen weiteren Signaleingang 226 kann der pH-Sollwert der Korrektureinrichtung 230 zur Verfügung gestellt werden.

Die Korrektureinrichtung 230 kann Rechenmittel, wie Prozessor- und Speichermittel, eingerichtet zum Korrigieren des pH-Istwerts und/oder des pH-Sollwerts aufweisen. Insbesondere kann ein erstes Korrekturmodul 230.1 vorgesehen sein, um den gemessenen und zur Verfügung gestellten pH-Istwert durch Berücksichtigung von bekannten Einflüssen (z.B. Säure und Base Kombination, Temperatur, Salzbildung) auf die Wasserdissoziation zu korrigieren. Es kann beispielsweise der korrigierte pH-Istwert ohne Salz-Einfluss bei einer Temperatur von 25°C berechnet werden. Die Berechnung kann wie folgt erfolgen:

$$pH\_korrigiert = pH - dpH_{sole} - dpH(T), \qquad\qquad (a2)$$

wobei z.B. $dpH_{sole}$ ein pH-Korrekturwert ist, um den Soleeinfluss auf den pH-Wert zu korrigieren und $dpH(T)$ ein von der Temperatur abhängiger pH-Korrekturwert ist, um den Temperatureinfluss zu korrigieren.

Der pH-Sollwert kann in einem weiteren Korrekturmodul 230.2 auf die gleiche Weise umgerechnet werden.

Es versteht sich, dass strukturell auch nur ein Signaleingang oder eine Vielzahl von Signaleingängen vorgesehen sein kann. Ferner versteht es sich, dass der pH-Sollwert auch in einer Speichereinrichtung der Ionenreglervorrichtung 204 abgelegt und abrufbar sein kann. Ebenso versteht es sich, dass auf eine Korrektureinrichtung 230 verzichtet werden kann, wenn (bereits) korrigierte pH-Werte zur Verfügung gestellt werden können. Beispielsweise kann eine Messeinrichtung vorgesehen sein, die bereits eine automatische Korrektur durchführt.

Im vorliegenden Ausführungsbeispiel werden der korrigierte pH-Istwert und der korrigierte pH-Sollwert (nachfolgend pH-Istwert und pH-Sollwert genannt) der Auswerteeinrichtung 206 zur Verfügung gestellt. In der vorliegenden bevorzugten Ausführungsform umfasst die Auswerteeinrichtung 206 vier Auswertemodule 206.1 bis 206.4.

Das erste Auswertemodul 206.1 erhält als Eingangswert den pH-Istwert. Das erste Auswertemodul 206.1 ist eingerichtet, aus dem pH-Istwert einen OH$^-$ Ionenkonzentrations-Istwert zu bestimmen. Insbesondere kann die OH$^-$ Ionenkonzentration gemäß folgender Rechenvorschrift berechnet werden:

$$OH^- \text{ Ionenkonzentrations-Istwert} = 10^{(-14 + pH\text{-}Istwert)} \qquad\qquad (b)$$

In entsprechender Weise kann der OH$^-$ Ionenkonzentrations-Sollwert in dem Auswertemodule 206.2 berechnet

werden:

$$\text{OH}^- \text{ Ionenkonzentrations-Sollwert} = 10^{(-14 + \text{pH-Sollwert})} \qquad (c)$$

Es versteht sich, dass gemäß anderen Ausführungsformen der vorliegenden Erfindung der OH⁻Ionenkonzentrations-Sollwert anstelle eines pH-Sollwerts vorgegeben werden kann und beispielsweise in einem Speicher gespeichert und abrufbar sein kann. In diesem Fall kann eine Berechnung entsprechend Formel (c) entfallen.

Das dritte Auswertemodul 206.3 erhält als Eingangswert den pH-Istwert. Das dritte Auswertemodul 206.3 ist eingerichtet, aus dem pH-Istwert den $H3O^+$ Ionenkonzentrations-Istwert zu bestimmen. Insbesondere kann die $H3O^+$ Ionenkonzentration gemäß folgender Rechenvorschrift berechnet werden:

$$\text{H3O}^+ \text{ Ionenkonzentrations-Istwert} = 10^{(-\text{pH-Istwert})} \qquad (d)$$

In entsprechender Weise kann der $H3O^+$ Ionenkonzentrations-Sollwert im Auswertemodul 206.4 berechnet werden:

$$\text{H3O}^+ \text{ Ionenkonzentrations-Sollwert} = 10^{(-\text{pH-Sollwert})} \qquad (e)$$

Mit anderen Worten werden die pH-Werte durch die Rechenvorschriften entlogarithmiert. Es versteht sich, dass gemäß anderen Ausführungsformen der vorliegenden Erfindung der $H3O^+$ Ionenkonzentrations-Sollwert anstelle eines pH-Sollwerts vorgegeben werden kann und beispielsweise in einem Speicher gespeichert und abrufbar sein kann. In diesem Fall kann eine Berechnung entsprechend Formel (e) entfallen.

Wie ferner dem Ausführungsbeispiel der Figur 2a entnommen werden kann, sind vorzugsweise zwei Ionenreglern 210.1 und 210.2 von der Ionenreglereinrichtung 208 umfasst. Der erste Ionenregler 210.1, insbesondere ein OH⁻ Ionenregler 210.1, erhält als Eingangswerte den OH⁻Ionenkonzentrations-Sollwert und den OH⁻ Ionenkonzentrations-Istwert. Der zweite Ionenregler 210.2, insbesondere ein $H3O^+$ Ionenregler 210.2, erhält als Eingangswerte den $H3O^+$ Ionenkonzentrations-Sollwert und den $H3O^+$ Ionenkonzentrations-Istwert. Beide Ionenregler 210.1 und 210.2 sind eingerichtet, aus der Regelabweichung eine Stellgröße abzuleiten.

Wie nachfolgend beschrieben wird, kann durch eine Ionenreglerauswahleinrichtung 232 ausgewählt werden, welcher von den zwei Ionenregler 210.1, 210.2 tatsächlich zur Regelung des mindestens einen Ventilmittels verwendet wird. Insbesondere hat sich gezeigt, dass für eine möglichst exakte Regelung und damit Anpassung des pH-Niveaus von dem Gemisch in der Reaktorkammer aus den Ionenreglern derjenige ausgewählt wird, der vom Betrag her die größere Regelgrößenabweichung aufweist. Mit anderen Worten ist stets nur einer der Ionenregler 210.1, 210.2 aktiv während der andere inaktiv geschaltet ist.

Insbesondere können hierfür in der Ionenreglerauswahleinrichtung 232 drei Module 232.1 bis 232.3 vorgesehen sein. Ein erstes Regelgrößenabweichungsmodul 232.1 ist dazu eingerichtet, die Regelabweichung für die OH⁻ Ionenkonzentration zu bestimmen. Ein zweites Regelgrößenabweichungsmodul 232.2 ist dazu eingerichtet, die Regelabweichung für die $H3O^+$ Ionenkonzentration zu bestimmen. Dies kann insbesondere basierend auf der folgenden Rechenvorschrift erfolgen:

$$\text{Regelabweichung} = \text{abs}(\text{Ionenkonzentrations-Sollwert} - \text{Ionenkonzentrations-Istwert}) \qquad (f)$$

Die berechneten Beträge (abs) der jeweiligen Regelabweichungswerte können von den Regelgrößenabweichungsmodulen 232.1, 232.2 dem dritten Modul 232.3, insbesondere einem Vergleichsmodul 232.3, zur Verfügung gestellt werden. Das Vergleichsmodul 232.3 ist dazu eingerichtet, die bereitgestellten Beträge der Regelabweichungswerte miteinander zu vergleichen. Abhängig von dem Vergleichsergebnis kann dann einer der Ionenregler 210.1, 210.2 aktiviert werden. Insbesondere wird der Ionenregler 210.1, 210.2 aktiviert, dessen Regelabweichung vom Betrag her größer ist.

Der inaktive Ionenregler 210.1, 210.2 kann von der Ionenreglerauswahleinrichtung 232 auf Nachführen gestellt werden. Unter Nachführen ist hierbei insbesondere zu verstehen, dass der inaktive Ionenregler 210.1, 210.2 die Stellgröße des aktiven Ionenreglers 210.1, 210.2 nachführt. Bei einer Aktivierung kann ein stoßfreies Umschalten (Stellgröße ist im Moment des Umschaltens konstant) zwischen den Ionenregler 210.1, 210.2 erreicht werden.

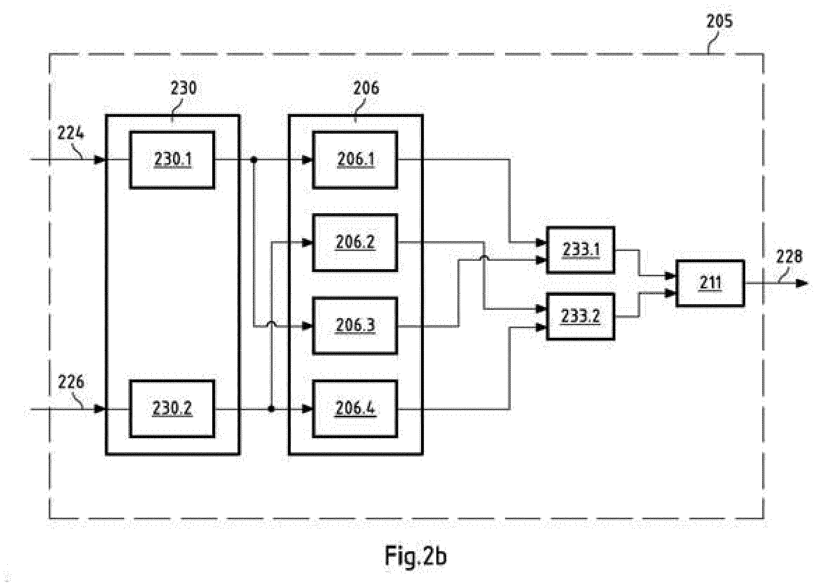

Die Figur 2b zeigt ein weiteres Ausführungsbeispiel einer Ionenreglervorrichtung 205 gemäß der vorliegenden Erfindung. Die Ionenreglervorrichtung 205 unterscheidet sich von der zuvor beschriebenen Ionenreglervorrichtung 204 insbesondere durch die mit den Bezugszeichen 211 und 233.1, 233.2 bezeichneten Blöcke.

Der OH$^-$ Ionenkonzentrations-Istwert kann aus dem Auswertemodul 206.1 und der H3O$^+$ Ionenkonzentrations-Istwert aus dem Auswertemodul 206.3 dem ersten Bestimmungsmodul 233.1 als Eingangswerte zugeführt werden. Das erste Bestimmungsmodul 233.1 ist insbesondere eingerichtet, um den Istwert der kombinierten Ionenkonzentration gemäß folgender Rechenvorschrift zu berechnen:

Wenn H3O$^+$ Ionenkonzentrations-Istwert > OH$^-$ Ionenkonzentrations-Istwert,
dann ist Kombinierter Ionenkonzentrations-Istwert = H3O$^+$ Ionenkonzentrations-Istwert,
sonst ist Kombinierter Ionenkonzentrations-Istwert = (-1)*OH$^-$ Ionenkonzentrations-Istwert.

Der OH$^-$ Ionenkonzentrations-Sollwert aus dem Auswertemodul 206.2 und der H3O$^+$ Ionenkonzentrations-Sollwert aus dem Auswertemodul 206.4 können dem weiteren Bestimmungsmodul 233.2 als Eingangswerte zugeführt werden. Das weitere Bestimmungsmodul 233.2 ist insbesondere eingerichtet, um den Sollwert der kombinierten Ionenkonzentration gemäß folgender Rechenvorschrift zu berechnen:

Wenn H3O$^+$ Ionenkonzentrations-Sollwert < OH$^-$ Ionenkonzentrations-Sollwert,
dann ist Kombinierter Ionenkonzentrations-Sollwert = H3O$^+$ Ionenkonzentrations-Sollwert,
sonst ist Kombinierter Ionenkonzentrations-Sollwert = (-1)*OH$^-$ Ionenkonzentrations-Sollwert.

Wie ferner dem Ausführungsbeispiel der Figur 2b entnommen werden kann, ist ein (einzelner) kombinierter Ionenregler 211 vorgesehen und entsprechend eingerichtet. Als Eingangswerte empfängt der Ionenregler 211 den kombinierten Ionenkonzentrations-Sollwert von Bestimmungsmodul 233.1 und den kombinierten Ionenkonzentrations-Istwert von Bestimmungsmodul 233.2. Der kombinierte Ionenregler 211 ist eingerichtet, aus der Regelabweichung eine Stellgröße abzuleiten. Mit der Stellgröße kann dann ein Ventilmittel angesteuert werden.

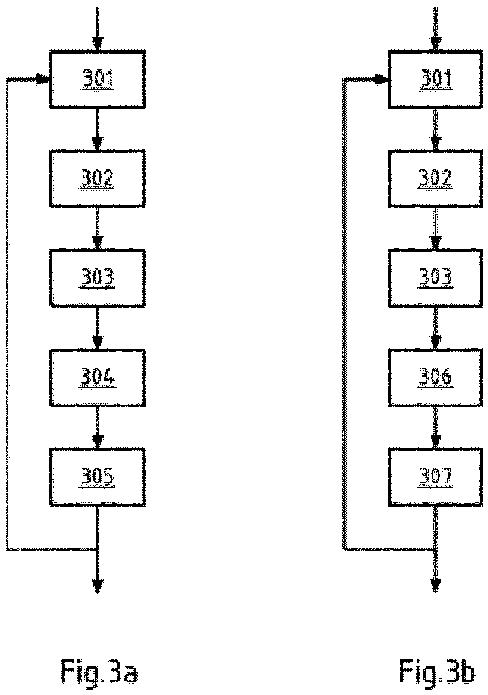

Die Funktionsweise der Ionenreglervorrichtungen 204 und 211 werden nachfolgend mittels der Figuren 3a und 3b und den zuvor beschriebenen Figuren 2a und 2b näher beschrieben. Figur 3a und 3b zeigen beispielhafte Diagramme von Ausführungsbeispielen von Verfahren gemäß der vorliegenden Erfindung.

In einem ersten Schritt 301 kann der pH-Istwert des Gemisches in einer Reaktorkammer gemessen werden. Insbesondere kann der gemessene pH-Istwert der Ionenreglervorrichtung 204 zur Verfügung gestellt werden. In einem nächsten (optionalen) Schritt 302 kann der gemessene pH-Istwert korrigiert werden. Insbesondere kann es beispielsweise aufgrund der Temperatur des Gemisches dazu kommen, dass der gemessene pH-Istwert einen Fehler aufweist. Die Korrektureinrichtung 230 kann einen korrigierten pH-Istwert berechnen. Ferner kann auch ein vorgebbarer pH-Sollwert entsprechend korrigiert werden. Es versteht sich, dass eine Korrektur entfallen kann, falls der Ionenreglervorrichtung 204 bereits korrekte pH-Werte zur Verfügung gestellt werden. Im gleichen Schritt kann ggf. auch ein pH-Sollwert korrigiert werden.

Anschließend kann in Schritt 303 zumindest aus dem bereitgestellten korrekten pH-Istwert (nachfolgend pH-Istwert) mindestens ein Ionenzentrations-Istwert bestimmt werden. Vorzugsweise werden in Schritt 303 aus dem pH-Istwert von einer Auswerteinrichtung 206 ein H3O$^+$ Ionenkonzentrations-Istwert und ein OH$^-$ Ionenkonzentrations-Istwert bestimmt. Insbesondere wird eine Linearisierung des Regelungsproblems vorgenommen, indem der pH-Istwert und ggf. der pH-Sollwert nach einer Ionen-Konzentration umgerechnet werden. Die Umrechnung kann sowohl zu einer H3O$^+$ Konzentration als auch einer OH$^-$ bzw. COH$^-$ Konzentration durchgeführt werden. Ziel der Umrechnung ist es insbesondere, dass die Reaktion der Hilfsregelgrößen (pH als H3O$^+$ Konzentration bzw. pH als OH$^-$ Konzentration) in gleicher Größenordnung auf Änderungen der Stellgröße reagieren. Dies ist insbesondere für eine verbesserte, gleichwertige Umschaltung zwischen den Ionenreglern vorteilhaft. Daher kann die Korrektur des Temperatureinflusses und des Salzeinflusses vorzugsweise derart erfolgen, dass die Umschaltung der Ionenregler 210.1, 210.2 (in etwa) am Durchbruchspunkt der Titrationskurve erfolgt.

Im nächsten Schritt 304 kann dann zunächst entschieden werden, welcher von den zwei Ionenreglern 210.1, 210.2 für die Regelung aktiviert wird. Die Auswahl, welcher der beiden Ionenregler 210.1, 210.2 aktiv ist, kann die Ionenreglerauswahleinrichtung 232 insbesondere anhand der Regelabweichungen bestimmen. Der Ionenregler 210.1, 210.2, der vom Betrag her die größere Regelabweichung aufweist, kann aktiviert werden. Dieser regelt somit den Prozess. Der inaktive Ionenregler 210.1, 210.2 kann auf Nachführen geschaltet werden.

In Schritt 305 regelt der aktivierte Ionenregler 210.1, 210.2 dann das mindestens eine Ventilmittel abhängig von dem von der Auswerteeinrichtung 206 bereitgestellten Ionenkonzentrations-Istwert und dem von der Auswerteeinrichtung 206 bereitgestellten Ionenkonzentrations-Sollwert.

Mit Blick auf die Figur 3b sind anstelle der Schritte 304 und 305 die Schritte 306 und 307 vorgesehen. In dem Schritt 306 erfolgt insbesondere die Berechnung des kombinierten Ionenkonzentrations-Istwerts und des kombinierten Ionenkonzentrations-Sollwerts mittels der Module 233. 1 und 233.2.

In Schritt 307 regelt der aktivierte kombinierte Ionenregler 211 dann das mindestens eine Ventilmittel abhängig von dem bestimmten kombinierten Ionenkonzentrations-Istwert.

Es versteht sich, dass die zuvor beschriebenen Schritte zumindest teilweise parallel durchgeführt werden können. Insbesondere kann eine (nahezu) kontinuierliche Überwachung und Regelung des Neutralisationsprozesses erfolgen.

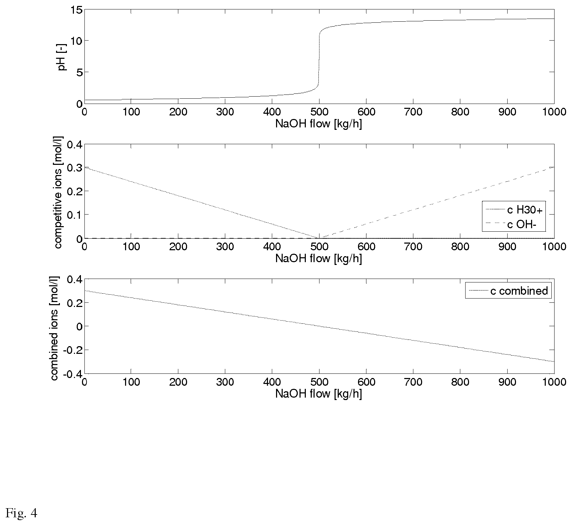

Die Figur 4 zeigt ein beispielhaftes Simulationsbeispiel zur Neutralisation eines Salzsäurestroms HCl von 550 kg/h mit einem Natronlaugestrom NaOH als Stellgröße. Das obere Bild der Figur 4 zeigt die Durchbruchskurve des pH-Werts. Das mittlere Bild zeigt die Ionenkonzentrationen ($H_3O^+$, $OH^-$). Das untere Bild zeigt eine kombinierte Ionenkonzentration.

Erfolgt die Umschaltung am Durchbruchspunkt der Titrationskurve, so ist das (lineare) Strecken-Verhalten der Hilfsregelgrößen $OH^-$ Ionenkonzentrations-Istwert und $H_3O^+$ Ionenkonzentrations-Istwert auf Änderungen der Stellgröße bis auf das Vorzeichen gleich, wie dem mittleren Bild von Figur 4 entnommen werden kann. Beide Ionenregler können daher bis auf die Wirkrichtung (invers, direkt) auf gleiche Weise parametriert werden. Wie das untere Bild zeigt, kann auf beiden Ionenkonzentrationsbereichen das gleiche Streckenverhalten (Verhalten der Ionenkonzentration bei Änderung der Stellgröße) erreicht werden.

**Patentansprüche**

1. Neutralisationsanlage (100), umfassend:

   - mindestens eine Reaktionskammer (102) mit einer Messeinrichtung (125) zur Erfassung eines pH-Istwerts eines Gemisches in der Reaktionskammer (102), mit einer ersten Zuleitung (114) für ein säurehaltiges Produkt und mindestens einer weiteren Zuleitung (116) für ein basenhaltiges Produkt, ,
   - wobei mindestens eine der Zuleitungen (114, 116) mindestens ein Ventilmittel (118, 120) zur Regelung der Einflussmenge in die Reaktionskammer (102) aufweist,

   **dadurch gekennzeichnet, dass**

   - eine Ionenreglervorrichtung (104, 204, 205) mindestens eine Auswerteeinrichtung (106, 206) eingerichtet zum Bestimmen von mindestens einem Ionenkonzentrations-Istwert basierend auf einem pH-Istwert des in der Reaktionskammer (102) befindlichen Gemisches (122) umfasst, und
   - die Ionenreglervorrichtung (104, 204, 205) mindestens eine Ionenreglereinrichtung (108, 208) umfassend mindestens einen Ionenregler (110, 210.1, 210.2, 211) eingerichtet zum Regeln des Ventilmittels (118, 120) abhängig von dem Ionenkonzentrations-Istwert und einem Ionenkonzentrations-Sollwert umfasst.

2. Neutralisationsanlage (100) nach Anspruch 1, **dadurch gekennzeichnet, dass**

   - die Auswerteeinrichtung (106, 206) ein erstes Auswertemodul (206.1) eingerichtet zum Bestimmen von einem ersten Ionenkonzentrations-Istwert basierend auf dem pH-Istwert umfasst, und
   - die Auswerteeinrichtung (106, 206) mindestens ein weiteres Auswertemodul (206.2) eingerichtet zum Bestimmen von mindestens einem weiteren Ionenkonzentrations-Istwert basierend auf dem pH-Istwert umfasst.

3. Neutralisationsanlage (100) nach Anspruch 2, **dadurch gekennzeichnet, dass**

   - der erste Ionenkonzentrations-Istwert ein $OH^-$ Ionenkonzentrations-Istwert ist, und/oder
   - der weitere Ionenkonzentrations-Istwert ein $H_3O^+$ Ionenkonzentrations-Istwert ist.

4. Neutralisationsanlage (100) nach einem der Ansprüche 2 oder 3, **dadurch gekennzeichnet, dass**

   - die Ionenreglereinrichtung (108, 208) einen ersten Ionenregler (210.1) und mindestens einen weiteren Ionenregler (210.2) umfasst,
   - der erste Ionenregler (210.1) eingerichtet ist, das Ventilmittel (118, 120) abhängig von dem ersten Ionenkonzentrations-Istwert und dem ersten Ionenkonzentrations-Sollwert zu regeln, und
   - der weitere Ionenregler (210.2) eingerichtet ist, das Ventilmittel (118, 120) abhängig von dem weiteren Ionenkonzentrations-Istwert und dem weiteren Ionenkonzentrations-Sollwert zu regeln.

5. Neutralisationsanlage (100) nach Anspruch 4, **dadurch gekennzeichnet, dass**

- der erste Ionenregler (210.1) ein OH⁻ Ionenregler (210.1) ist, und/oder
- der weitere Ionenregler (210.2) ein H3O⁺ Ionenregler (210.2) ist.

6. Neutralisationsanlage (100) nach einem der Ansprüche 4 oder 5, **dadurch gekennzeichnet, dass**

   - die Ionenreglervorrichtung (104, 204, 205) mindestens eine Ionenreglerauswahleinrichtung (232) eingerichtet zum Bestimmen von einem aktiven Ionenregler (210.1, 210.2) aus dem ersten Ionenregler (210.1) und dem weiteren Ionenregler (210.2) umfasst,
   - wobei nur der aktive Ionenregler (210.1, 210.2) das Ventilmittel (118, 120) regelt.

7. Neutralisationsanlage (100) nach Anspruch 7, **dadurch gekennzeichnet, dass** die Ionenreglerauswahleinrichtung (232) eingerichtet ist, den aktiven Ionenregler (210.1, 210.2) basierend auf der Regelabweichung zwischen dem ersten Ionenkonzentrations-Istwert und dem ersten Ionenkonzentrations-Sollwert und/oder der Regelabweichung zwischen dem weiteren Ionenkonzentrations-Istwert und dem weiteren Ionenkonzentrations-Sollwert zu bestimmen.

8. Neutralisationsanlage (100) nach einem der Ansprüche 6 oder 7, **dadurch gekennzeichnet, dass**

   - die Ionenreglerauswahleinrichtung (232) ein erstes Regelgrößenabweichungsmodul (232.1) eingerichtet zum Bestimmen des Betrags der Regelabweichung zwischen dem ersten Ionenkonzentrations-Istwert und dem ersten Ionenkonzentrations-Sollwert umfasst,
   - die Ionenreglerauswahleinrichtung (232) mindestens ein weiteres Regelgrößenabweichungsmodul (232.2) eingerichtet zum Bestimmen des Betrags der Regelabweichung zwischen dem weiteren Ionenkonzentrations-Istwert und dem weiteren Ionenkonzentrations-Sollwert umfasst,
   - die Ionenreglerauswahleinrichtung (232) mindestens ein Vergleichsmodul (232.3) eingerichtet zum Vergleichen der bestimmten Beträge umfasst, und
   - die Ionenreglerauswahleinrichtung (232) eingerichtet ist, den aktiven Ionenregler (210.1, 210.2) basierend auf dem Vergleichsergebnis zu bestimmen.

9. Neutralisationsanlage (100) nach einem der Ansprüche 6 bis 8, **dadurch gekennzeichnet, dass** die Ionenreglerauswahleinrichtung (232) eingerichtet ist, den inaktiven Ionenregler (210.1, 210.2) auf Nachführen zu schalten, derart, dass ein im Wesentlichen stoßfreies Umschalten zwischen dem ersten Ionenregler (210.1) und dem weiteren Ionenregler (210.2) erreicht wird.

10. Neutralisationsanlage (100) nach einem der vorherigen Ansprüche, **dadurch gekennzeichnet, dass** der Ionenregler (110, 210.1, 210.2) ein PID-Regler (110, 210.1, 210.2) ist.

11. Neutralisationsanlage (100) nach einem der vorherigen Ansprüche, **dadurch gekennzeichnet, dass** die Ionenreglervorrichtung (104, 204) mindestens eine Korrektureinrichtung (230) eingerichtet zum Korrigieren des pH-Istwerts und / oder des pHsollwertes des in der Reaktionskammer (102) befindlichen Gemisches (122) umfasst.

12. Neutralisationsanlage (100) nach einem der Ansprüche 1 bis 11, **dadurch gekennzeichnet, dass**

   - ein kombinierter Ionenregler (211) vorgesehen ist,
   - der kombinierte Ionenregler (211) eingerichtet ist, das Ventilmittel (118, 120) abhängig von einem kombinierten Ionenkonzentrations-Istwert und einem kombinierten Ionenkonzentrations-Sollwert zu regeln,
   - wobei ein erstes Bestimmungsmodul (233.1) eingerichtet zum Bestimmen des kombinierten Ionenkonzentrations-Istwert abhängig von dem OH⁻Ionenkonzentrations-Istwert und dem H3O⁺ Ionenkonzentrations-Istwert vorgesehen ist, und/oder
   - wobei ein weiteres Bestimmungsmodul (233.2) eingerichtet zum Bestimmen des kombinierten Ionenkonzentrations-Sollwert abhängig von dem OH⁻ Ionenkonzentrations-Sollwert und dem H3O⁺ Ionenkonzentrations-Sollwert vorgesehen ist.

13. Computer-implementiertes Verfahren zur Neutralisation eines säurehaltigen oder basenhaltigen Gemischs (122) in einer Neutralisationsanlage (100), umfassend mindestens eine Reaktionskammer (102) mit dem säurehaltigen oder basenhaltigen Gemisch (122), mit einer Messeinrichtung (125) zur Erfassung eines pH-Istwerts des Gemisches in der Reaktionskammer (102), und mindestens einer Zuleitung (116) mit mindestens einem Ventilmittel (120) zur geregelten Zuleitung einer Einflussmenge in die Reaktionskammer (102), wobei das Verfahren folgende Schritte umfasst:

a) Bereitstellen des pH-Istwerts des in der Reaktionskammer (102) befindlichen Gemisches (122) sowie mindestens eines Ionen-Konzentrations-Sollwert,

b) Übertragen des pH-Istwerts zu einer Auswerteeinrichtung (106, 206) , wobei die Auswerteeinrichtung (106, 206) mindestens einen Ionenkonzentrations-Istwert aus dem pH-Istwert ableitet,

c) Übertragen des Ionenkonzentrations-Istwerts an einen Ionenregler, der eine Regelabweichung von dem Ionenkonzentrations-Istwert aus b) zu dem Ionenkonzentrations-Sollwert ermittelt,

d) Regeln der Zuleitung der Einflussmenge in die Reaktionskammer (102) durch Betätigung des Ventilmittels (120) in Abhängigkeit der Regelabweichung aus c).

14. Verfahren nach Anspruch 13, wobei in einem Schritt a') der pH-Istwert und optional der pH-Sollwert aus a) in eine Korrektureinrichtung übertragen wird, die der pH-Istwert und optional der pH-Sollwert durch einem oder mehreren Einflüsse auf die Wasserdissoziation selektiert aus einer Gruppe umfassend Saure und Base Kombination, Temperatur und Salzbildung, korrigiert und im folgenden Schritt b) die korrigierten pH-Istwert und pH-Sollwert zur der Auswerteeinrichtung (106, 206) übertragen werden.

15. Ionenreglervorrichtung (104, 204, 205) für eine Neutralisationsanlage (100), umfassend:

- mindestens eine Auswerteeinrichtung (106, 206) eingerichtet zum Bestimmen von mindestens einem Ionenkonzentrations-Istwerts aus einem pH-Istwert eines in einer Reaktionskammer (102) der Neutralisationsanlage (100) befindlichen Gemisches (122), und

- mindestens eine Ionenreglereinrichtung (108, 208) mit mindestens einem Ionenregler (110, 210.1, 210.2) eingerichtet zum Regeln von mindestens einem Ventilmittel (118, 120) einer Zuleitung (114, 116) in die Reaktionskammer (102) der Neutralisationsanlage (100) abhängig von dem Ionenkonzentrations-Istwert und einem Ionenkonzentrations-Sollwert.

## Claims

1. Neutralization plant (100), comprising:

- at least one reaction chamber (102) having a measuring device (125) for detecting an actual pH of a mixture in the reaction chamber (102), having a first feed (114) for an acid-containing product and at least one further feed (116) for a base-containing product,

- wherein at least one of the feeds (114, 116) comprises at least one valve means (118, 120) for controlling the inflow amount into the reaction chamber (102),

**characterized in that**

- an ion controller apparatus (104, 204, 205) comprises at least one evaluation device (106, 206) set up for determining at least one actual ion concentration based on an actual pH of the mixture (122) present in the reaction chamber (102) and

- the ion controller apparatus (104, 204, 205) comprises at least one ion controller device (108, 208) comprising at least one ion controller (110, 210.1, 210.2, 211) set up for controlling the valve means (118, 120) according to the actual ion concentration and a target ion concentration.

2. Neutralization plant (100) according to Claim 1,
**characterized in that**

- the evaluation device (106, 206) comprises a first evaluation module (206.1) set up for determining a first actual ion concentration based on the actual pH and

- the evaluation device (106, 206) comprises at least one further evaluation module (206.2) set up for determining at least one further actual ion concentration based on the actual pH.

3. Neutralization plant (100) according to Claim 2,
**characterized in that**

- the first actual ion concentration is an actual $OH^-$ ion concentration and/or

- the further actual ion concentration is an actual $H_3O^+$ ion concentration.

**4.** Neutralization plant (100) according to either of Claims 2 and 3, **characterized in that**

- the ion controller device (108, 208) comprises a first ion controller (210.1) and at least one further ion controller (210.2),
- the first ion controller (210.1) is set up to control the valve means (118, 120) according to the first actual ion concentration and the first target ion concentration and
- the further ion controller (210.2) is set up to control the valve means (118, 120) according to the further actual ion concentration and the further target ion concentration.

**5.** Neutralization plant (100) according to Claim 4, **characterized in that**

- the first ion controller (210.1) is an OH⁻ ion controller (210.1) and/or
- the further ion controller (210.2) is an H3O⁺ ion controller (210.2).

**6.** Neutralization plant (100) according to either of Claims 4 and 5, **characterized in that**

- the ion controller apparatus (104, 204, 205) comprises at least one ion controller selection device (232) set up for determining an active ion controller (210.1, 210.2) from the first ion controller (210.1) and the further ion controller (210.2),
- wherein only the active ion controller (210.1, 210.2) controls the valve means (118, 120).

**7.** Neutralization plant (100) according to Claim 7,
**characterized in that** the ion controller selection device (232) is set up to determine the active ion controller (210.1, 210.2) based on the control deviation between the first actual ion concentration and the first target ion concentration and/or the control deviation between the further actual ion concentration and the further target ion concentration.

**8.** Neutralization plant (100) according to either of Claims 6 and 7, **characterized in that**

- the ion controller selection device (232) comprises a first controlled variable deviation module (232.1) set up for determining the magnitude of the control deviation between the first actual ion concentration and the first target ion concentration,
- the ion controller selection device (232) comprises at least one further controlled variable deviation module (232.2) set up for determining the magnitude of the control deviation between the further actual ion concentration and the further target ion concentration,
- the ion controller selection device (232) comprises at least one comparison module (232.3) set up for comparing the determined magnitudes and
- the ion controller selection device (232) is set up for determining the active ion controller (210.1, 210.2) based on the comparison result.

**9.** Neutralization plant (100) according to any of Claims 6 to 8, **characterized in that** the ion controller selection device (232) is set up for switching the inactive ion controller (210.1, 210.2) to tracking such that a substantially smooth switchover between the first ion controller (210.1) and the further ion controller (210.2) is achieved.

**10.** Neutralization plant (100) according to any of the preceding claims, **characterized in that** the ion controller (110, 210.1, 210.2) is a PID controller (110, 210.1, 210.2).

**11.** Neutralization plant (100) according to any of the preceding claims, **characterized in that** the ion controller apparatus (104, 204) comprises at least one correction device (230) set up for correcting the actual pH and/or the target pH of the mixture (122) present in the reaction chamber (102).

**12.** Neutralization plant (100) according to any of Claims 1 to 11, **characterized in that**

- a combined ion controller (211) is provided,
- the combined ion controller (211) is set up to control the valve means (118, 120) according to an actual combined ion concentration and a target combined ion concentration,
- wherein a first determination module (233.1) set up for determining the actual combined ion concentration according to the actual OH⁻ ion concentration and the actual H3O⁺ ion concentration is provided and/or
- wherein a further determination module (233.2) set up for determining the target combined ion concentration according to the target OH⁻ ion concentration and the target H3O⁺ ion concentration is provided.

13. Computer-implemented method for neutralizing an acid-containing or base-containing mixture (122) in a neutralization plant (100), comprising at least one reaction chamber (102) comprising the acid-containing or base-containing mixture (122) having a measuring device (125) for detecting an actual pH of a mixture in the reaction chamber (102) and at least one feed (116) comprising at least one valve means (120) for controlled feeding of an inflow amount into the reaction chamber (102),
wherein the method comprises the steps of:

a) providing the actual pH of the mixture (122) present in the reaction chamber (102) and at least one target ion concentration,
b) transferring the actual pH to an evaluation device (106, 206), wherein the evaluation device (106, 206) derives at least one actual ion concentration from the actual pH,
c) transferring the actual ion concentration to an ion controller which determines a control deviation from the actual ion concentration from b) to the target ion concentration,
d) controlling the feeding of the inflow amount into the reaction chamber (102) by operation of the valve means (120) according to the control deviation from c).

14. Method according to Claim 13, wherein in a step a') the actual pH and optionally the target pH from a) is transferred into a correction device which corrects the actual pH and optionally the target pH via one or more influences on the dissociation of water selected from a group comprising acid and base combination, temperature and salt formation and in the subsequent step b) the corrected actual pH and target pH are transferred to the evaluation device (106, 206).

15. Ion controller apparatus (104, 204, 205) for a neutralization plant (100), comprising:

- at least one evaluation device (106, 206) set up for determining at least one actual ion concentration from an actual pH of a mixture (122) present in a reaction chamber (102) of the neutralization plant (100) and
- at least one ion controller device (108, 208) having at least one ion controller (110, 210.1, 210.2) set up for controlling at least one valve means (118, 120) of a feed (114, 116) into the reaction chamber (102) of the neutralization plant (100) according to the actual ion concentration and a target ion concentration.

**Revendications**

1. Installation de neutralisation (100) comprenant :

- au moins une chambre de réaction (102) comportant un dispositif de mesure (125) destiné à détecter une valeur réelle de pH d'un mélange dans la chambre de réaction (102), comportant une première conduite d'alimentation (114) pour un produit contenant un acide et au moins une autre conduite d'alimentation (116) pour un produit contenant une base,
- au moins l'une des conduites d'alimentation (114, 116) présentant au moins un moyen à vanne (118, 120) destiné à réguler la quantité d'entrée dans la chambre de réaction (102),

**caractérisée en ce que**

- un système régulateur d'ions (104, 204, 205) comprend au moins un dispositif d'évaluation (106, 206) conçu pour déterminer au moins une valeur réelle de concentration ionique sur la base d'une valeur réelle de pH du mélange (122) se trouvant dans la chambre de réaction (102) et
- le système régulateur d'ions (104, 204, 205) comprend au moins un dispositif régulateur d'ions (108, 208) comprenant au moins un régulateur d'ions (110, 210.1, 210.2, 211) conçu pour réguler le moyen à vanne (118, 120) en fonction de la valeur réelle de la concentration ionique et d'une valeur de consigne de la concentration ionique.

2. Installation de neutralisation (100) selon la revendication 1, **caractérisée en ce que**

- le dispositif d'évaluation (106, 206) comprend un premier module d'évaluation (206.1) conçu pour déterminer une première valeur réelle de concentration ionique sur la base de la valeur réelle de pH et
- le dispositif d'évaluation (106, 206) comprend au moins un autre module d'évaluation (206.2) conçu pour déterminer au moins une autre valeur réelle de concentration ionique sur la base de la valeur réelle de pH.

3. Installation de neutralisation (100) selon la revendication 2, **caractérisée en ce que**

- la première valeur réelle de concentration ionique est une valeur réelle de concentration en ions OH⁻et/ou
- l'autre valeur réelle de concentration ionique est une valeur réelle de concentration en ions $H_3O^+$.

4. Installation de neutralisation (100) selon l'une des revendications 2 ou 3, **caractérisée en ce que**

- le dispositif régulateur d'ions (108, 208) comprend un premier régulateur d'ions (210.1) et au moins un autre régulateur d'ions (210.2),
- le premier régulateur d'ions (210.1) est conçu pour réguler le moyen à vanne (118, 120) en fonction de la première valeur réelle de concentration ionique et de la première valeur de consigne de concentration ionique et
- l'autre régulateur d'ions (210.2) est conçu pour réguler le moyen à vanne (118, 120) en fonction de l'autre valeur réelle de concentration ionique et de l'autre valeur de consigne de concentration ionique.

5. Installation de neutralisation (100) selon la revendication 4, **caractérisée en ce que**

- le premier régulateur d'ions (210.1) est un régulateur d'ions OH⁻ (210.1) et/ou
- l'autre régulateur d'ions (210.2) est un régulateur d'ions $H3O^+$ (210.2).

6. Installation de neutralisation (100) selon l'une des revendications 4 ou 5, **caractérisée en ce que**

- le système régulateur d'ions (104, 204, 205) comprend au moins un dispositif de sélection (232) de régulateur d'ions conçu pour déterminer un régulateur d'ions actif (210.1, 210.2) parmi le premier régulateur d'ions (210.1) et l'autre régulateur d'ions (210.2),
- seul le régulateur d'ions actif (210.1, 210.2) régulant le moyen à vanne (118, 120).

7. Installation de neutralisation (100) selon la revendication 7, **caractérisée en ce que** le dispositif de sélection (232) de régulateur d'ions est conçu pour déterminer le régulateur d'ions actif (210.1, 210.2) sur la base de l'écart de régulation entre la première valeur réelle de concentration ionique et la première valeur de consigne de concentration ionique et/ou de l'écart de régulation entre l'autre valeur réelle de concentration ionique et l'autre valeur de consigne de concentration ionique.

8. Installation de neutralisation (100) selon l'une des revendications 6 ou 7, **caractérisée en ce que**

- le dispositif de sélection (232) de régulateur d'ions comprend un premier module d'écart de grandeur de régulation (232.1) conçu pour déterminer la contribution de l'écart de régulation entre la première valeur réelle de concentration ionique et la première valeur de consigne de concentration ionique,
- le dispositif de sélection (232) de régulateur d'ions comprend au moins un autre module d'écart de grandeur de régulation (232.2) conçu pour déterminer la contribution de l'écart de régulation entre l'autre valeur réelle de concentration ionique et l'autre valeur de consigne de concentration ionique,
- le dispositif de sélection (232) de régulateur d'ions comprend au moins un module de comparaison (232.3) conçu pour comparer les contributions déterminées et
- le dispositif de sélection (232) de régulateur d'ions est conçu pour déterminer le régulateur d'ions actif (210.1, 210.2) sur la base du résultat de comparaison.

9. Installation de neutralisation (100) selon l'une des revendications 6 à 8, **caractérisée en ce que** le dispositif de sélection (232) de régulateur d'ions est conçu pour commuter le régulateur d'ions inactif (210.1, 210.2) sur asservissement de manière telle qu'une commutation sensiblement sans à-coups est obtenue entre le premier régulateur d'ions (210.1) et l'autre régulateur d'ions (210.2).

10. Installation de neutralisation (100) selon l'une des revendications précédentes, **caractérisée en ce que** le régulateur d'ions (110, 210.1, 210.2) est un régulateur PID (110, 210.1, 210.2).

11. Installation de neutralisation (100) selon l'une des revendications précédentes, **caractérisée en ce que** le système régulateur d'ions (104, 204) comprend au moins un dispositif de correction (230) conçu pour corriger la valeur réelle de pH et/ou la valeur de consigne de pH du mélange (122) se trouvant dans la chambre de réaction (102) .

**12.** Installation de neutralisation (100) selon l'une des revendications 1 à 11, **caractérisée en ce que**

- un régulateur d'ions combiné (211) est prévu,
- le régulateur d'ions combiné (211) est conçu pour réguler le moyen à vanne (118, 120) en fonction d'une valeur réelle combinée de concentration ionique et d'une valeur de consigne combinée de concentration ionique,
- un premier module de détermination (233.1) conçu pour déterminer la valeur réelle combinée de concentration ionique en fonction de la valeur réelle de concentration en ions OH$^-$ et de la valeur réelle de concentration en ions H3O$^+$ étant prévu et/ou
- un autre module de détermination (233.2) conçu pour déterminer la valeur de consigne combinée de concentration ionique en fonction de la valeur de consigne de concentration en ions OH$^-$ et de la valeur de consigne de concentration en ions H3O$^+$ étant prévu.

**13.** Procédé, mis en œuvre par un ordinateur, destiné à neutraliser un mélange (122) contenant un acide ou une base dans une installation de neutralisation (100), comprenant au moins une chambre de réaction (102) comportant le mélange (122) contenant un acide ou une base, comportant un dispositif de mesure (125) destiné à détecter une valeur réelle de pH du mélange dans la chambre de réaction (102) et au moins une conduite d'alimentation (116) comportant au moins un moyen à vanne (120) pour l'alimentation régulée d'une quantité d'entrée dans la chambre de réaction (102),

le procédé comprenant les étapes suivantes :

a) mise à disposition de la valeur réelle de pH du mélange (122) se trouvant dans la chambre de réaction (102) ainsi que d'au moins une valeur de consigne de concentration ionique,
b) transmission de la valeur réelle de pH à un dispositif d'évaluation (106, 206), le dispositif d'évaluation (106, 206) déduisant au moins une valeur réelle de concentration ionique à partir de la valeur réelle de pH,
c) transmission de la valeur réelle de concentration ionique à un régulateur d'ions, qui détermine un écart de régulation de la valeur réelle de concentration ionique de b) par rapport à la valeur de consigne de concentration ionique,
d) régulation de l'alimentation de la quantité d'entrée dans la chambre de réaction (102) par actionnement du moyen à vanne (120) en fonction de l'écart de régulation de c).

**14.** Procédé selon la revendication 13, dans lequel, dans une étape a'), la valeur réelle de pH et éventuellement la valeur de consigne de pH de a) sont transmises dans un dispositif de correction qui corrige la valeur réelle de pH et éventuellement la valeur de consigne de pH par une ou plusieurs influences sur la dissociation de l'eau, sélectionnées dans un groupe comprenant une combinaison acide et base, la température et la formation de sel, et, dans l'étape suivante b), la valeur réelle de pH et la valeur de consigne de pH corrigées sont transmises au dispositif d'évaluation (106, 206).

**15.** Système régulateur d'ions (104, 204, 205) pour une installation de neutralisation (100), comprenant :

- au moins un dispositif d'évaluation (106, 206) conçu pour déterminer au moins une valeur réelle de concentration ionique à partir d'une valeur réelle de pH d'un mélange (122) se trouvant dans une chambre de réaction (102) de l'installation de neutralisation (100) et
- au moins un dispositif régulateur d'ions (108, 208) comportant au moins un régulateur d'ions (110, 210.1, 210.2) conçu pour réguler au moins un moyen à vanne (118, 120) d'une conduite d'alimentation (114, 116) dans la chambre de réaction (102) de l'installation de neutralisation (100) en fonction de la valeur réelle de concentration ionique et d'une valeur de consigne de concentration ionique.

Fig.1

Fig.2a

Fig.2b

Fig.3a

Fig.3b

Fig. 4